# EUROPÄISCHE PATENTSCHRIFT

(11) **EP 2 951 462 B1**
(45) Veröffentlichungstag und Bekanntmachung des Hinweises auf die Patenterteilung: **17.07.2019**
(21) Anmeldenummer: 14700451.9
(22) Anmeldetag: 09.01.2014
(51) Int. Cl.: F16F 15/12, F16F 15/131, F16F 15/14, F16H 45/02

(54) **DREHSCHWINGUNGSDÄMPFUNGSANORDNUNG FÜR DEN ANTRIEBSSTRANG EINES FAHRZEUGS**
TORSIONAL VIBRATION DAMPING ARRANGEMENT FOR THE DRIVETRAIN OF A VEHICLE
ENSEMBLE D'AMORTISSEMENT DE VIBRATIONS TORSIONNELLES POUR LA CHAÎNE CINÉMATIQUE D'UN VÉHICULE

(30) Priorität: 31.01.2013 DE 102013201617
(43) Veröffentlichungstag der Anmeldung: 09.12.2015
(73) Patentinhaber: ZF Friedrichshafen AG, 88046 Friedrichshafen (DE)
(72) Erfinder: GROSSGEBAUER, Uwe, 97250 Erlabrunn (DE); WEIGAND, Thomas, 97990 Weikersheim (DE)
(86) Internationale Anmeldenummer: PCT/EP2014/050287
(87) Internationale Veröffentlichungsnummer: WO 2014/117977

(56) Entgegenhaltungen:
- DE-C1- 19 538 723
- DE-U1- 9 414 314

## Beschreibung

Die vorliegende Erfindung betrifft eine Drehschwingungsdämpfungsanordnung, für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Aus der deutschen Patentanmeldung DE 10 2011 007 118 A1 ist eine gattungsgemäße Drehschwingungsdämpfungsanordnung bekannt, welche das in einen Eingangsbereich beispielsweise durch eine Kurbelwelle eines Antriebsaggregates eingeleitete Drehmoment in einen über einen ersten Drehmomentübertragungsweg übertragenen Drehmomentenanteil und einen über einen zweiten Drehmomentübertragungsweg geleiteten Drehmomentenanteil aufteilt. Bei dieser Drehmomentenaufteilung wird nicht nur ein statisches Drehmoment aufgeteilt, sondern auch die im zu übertragenen Drehmoment enthaltenen Schwingungen bzw. Drehungleichförmigkeiten, beispielsweise generiert durch die periodisch auftretenden Zündungen in einem Antriebsaggregat, werden anteilig auf die beiden Drehmomentübertragungswege aufgeteilt. In einer Koppelanordnung, die als ein Planetengetriebe mit einem Planetenradträger ausgeführt sein kann, werden die über die beiden Drehmomentübertragungswege übertragenen Drehmomentenanteile wieder zusammengeführt und dann als ein Gesamtdrehmoment in den Ausgangsbereich, beispielsweise eine Reibkupplung oder dergleichen, eingeleitet.

In zumindest einem der Drehmomentübertragungswege ist eine Phasenschieberanordnung mit einem Eingangselement und einem Ausgangselement vorgesehen, welche nach Art eines Schwingungsdämpfers, also mit einer Primärseite und einer durch die Kompressibilität einer Federanordnung bezüglich dieser verdrehbaren Sekundärseite, aufgebaut ist. Insbesondere dann, wenn dieses Schwingungssystem in einen überkritischen Zustand übergeht, also mit Schwingungen angeregt wird, die über der Resonanzfrequenz des Schwingungssystems liegen, tritt eine Phasenverschiebung von bis zu 180° auf. Dies bedeutet, dass bei maximaler Phasenverschiebung die vom Schwingungssystem abgegebenen Schwingungsanteile bezüglich der vom Schwingungssystem aufgenommenen Schwingungsanteile um 180° phasenverschoben sind. Da die über den anderen Drehmomentübertragungsweg geleiteten Schwingungsanteile keine oder ggf. eine andere Phasenverschiebung erfahren, können die in den zusammengeführten Drehmomentenanteilen enthaltenen und bezüglich einander dann phasenverschobenen Schwingungsanteile einander destruktiv überlagert werden, so dass im Idealfall das in den Ausgangsbereich eingeleitete Gesamt-drehmoment einem ein im Wesentlichen keine Schwingungsanteile enthaltenes statisches Drehmoment ist.

Ausgehend vom erläuterten Stand der Technik ist die Aufgabe der vorliegenden Erfindung, eine Drehschwingungsdämpfungsanordnung so weiterzubilden, dass diese ein noch weiter verbessertes Schwingungsdämpfungsverhalten und einen geringen axialen Bauraum aufweist.

Diese Aufgabe wird durch eine gattungsgemäße Drehschwingungsdämpfungsanordnung, welche zusätzlich das kennzeichnende Merkmal des Anspruches 1 umfasst, gelöst.

Gemäß der Erfindung wird diese Aufgabe gelöst durch eine Drehschwingungsdämpfungsanordnung für einen Antriebsstrang eines Fahrzeugs, umfassend einen zur Drehung um eine Drehachse A anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg, sowie eine, mit dem Ausgangsbereich in Verbindung stehende Koppelanordnung zur Überlagerung der über die Drehmomentübertragungswege geleiteten Drehmomente vorgesehen sind und wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist. Dabei bildet das Ausgangselement der Phasenschieberanordnung den Planetenradträger, auf dem das Planetenrad drehbar gelagert ist, wobei die Phasenschieberanordnung ein Schwingungssystem mit einer Primärmasse und einer gegen die Wirkung einer Federanordnung bezüglich der Primärmasse um die Drehachse A drehbaren Sekundärmasse umfasst. Ein derartiges Schwingungssystem kann also nach Art eines an sich bekannten Schwingungsdämpfers aufgebaut sein, bei dem insbesondere durch Beeinflussung der primärseitigen Masse und der sekundärseitigen Masse bzw. auch der Steifigkeit der Federanordnung die Resonanzfrequenz des Schwingungssystems definiert eingestellt werden kann und damit auch festgelegt werden kann, bei welcher Frequenz ein Übergang in den überkritischen Zustand auftritt, wobei weiterhin das Planetengetriebe ein Antriebssonnenrad und ein Abtriebssonnenrad umfasst, wobei das Antriebssonnerad drehfest mit der Primärmasse und das Abtriebssonnenrad drehfest mit dem Ausgangsbereich verbunden sind und wobei das Antriebssonnenrad und das Abtriebsssonnenrad mit dem Planetenrad kämmen oder wobei das Planetengetriebe ein Antriebshohlrad und ein Abtriebshohlrad umfasst, wobei das Antriebshohlrad drehfest mit der Primärmasse und das Abtriebshohlrad drehfest mit dem Ausgangsbreich verbunden ist und wobei das Antriebshohlrad und das Abtriebshohlrad mit dem Planetenrad kämmen. Bei den bisherigen Ausführungsformen der Drehschwingungsdämpfungsanordnung mit einem Planetengetriebe als Koppelanordnung, befindet sich der Planetenradträger in einem Drehmomentübertragungsweg, der keine Phasenverschiebung aufweist. Der Planetenradträger war daher meist starr mit der Primärmasse verbunden. Dadurch, dass das Ausgangselement der Phasenschieberanordnung den Planetenradträger der Koppelanordnung bildet und sich somit in einem phasenverschobenen Pfad befindet, ist hier der nicht phasenverschobene Pfad mittels eines Antriebssonnenrades mit der Primärmasse und der Koppelanordnung verbunden. Ein Abtriebssonnenrad verbindet den Ausgangsbereich mit der Koppelanordnung. Dabei ist das Abtriebssonnenrad drehfest mit dem Ausgangsbereich verbunden und kämmt mit dem Planetenrad.

Dabei kann die Phasenschieberanordnung zumindest aus einem Federsatz , der vorteilhaft eine Schraubenfeder umfasst, bestehen. Bei der Verwendung von zumindest zwei Federsätzen können diese sowohl in paralleler als auch in serieller Wirkweise angeordnet sein.

Das Drehmoment, das von einem Ausgang eines Antriebsaggregates, hier durch eine Kurbelwelle gebildet, kommen kann, kann wie folgt mittels der Drehschwingungsdämpfungsanordnung aufgeteilt und weitergeleitet werden.

Bei einem Drehmomentverlauf in axialer Richtung um die Drehachse A von dem Eingangsbereich zu dem Ausgangsbereich wird im ersten Drehmomentübertragungsweg der Federsatz über die Primärmasse mit einem ersten Drehmoment beaufschlagt. Von dem Federsatz gelangt das erste Drehmoment über ein Ausgangselement an den Planetenradträger. Der Planetenradträger nimmt das Planetenrad drehbar auf.

In dem zweiten Drehmomentübertragungsweg gelangt das zweite Drehmoment an ein Antriebssonnenrad, das drehfest mit dem Eingangsbereich verbunden ist. Das Antriebssonnenrad kämmt mit dem Planetenrad. Folglich vereinen sich an dem Planetenrad das erste und das zweite Drehmoment wieder. Da im ersten Drehmomentübertragungsweg das erste Drehmoment mittels der Phasenschieberanordnung eine Phasenverschiebung erfährt, werden am Planetenrad im Idealfall das erste, phasenverschobene Drehmoment und das zweite, nicht phasenverschobene Drehmoment in der Form destruktiv überlagert, dass die Drehschwingungen, die vom Antriebsaggregat einer Verbrennungsmaschine kommen können, durch die Überlagerung ausgeglichen werden und ein Drehmoment ohne Drehschwingungen an das Abtriebssonnenrad, das mit dem Planetenrad kämmt, weiter geführt wird. Damit wird die Drehschwingung im Drehmoment, die im Eingangsbereich der Drehschwingungsdämpfungsanordnung vorhanden ist, durch eine Aufteilung des Drehmoments in ein erstes und ein zweites Drehmoment und damit in zwei Drehmomentübertragungswege, durch die Phasenverschiebung mittels der Phasenschieberanordnung im ersten Drehmomentübertragungsweg, durch eine nicht phasenverschobene Weiterleitung des Drehmomentes im zweiten Drehmomentübertragungsweg und durch die destruktive Überlagerung des ersten und des zweiten Drehmomentes in der Koppelanordnung ausgeglichen und es gelangt im Idealfall ein Drehmoment ohne Drehschwingungen an den Ausgangsbereich und damit an beispielsweise eine Reibkupplung, einen Wandler oder an ein ähnliches Bauteil.

Vorteilhafte Ausgestaltungen und Weiterbildungen der Erfindung sind in den abhängigen Ansprüchen angegeben.

In einer vorteilhaften Ausführung umfasst die Koppelanordnung ein erstes und ein zweites Eingangsteil, in die über den ersten und den zweiten Drehmomentübertragungsweg geführte Drehmomente eingeleitet werden, sowie eine Überlagerungseinheit, in der die eingeleiteten Drehmomente wieder zusammengeführt werden und ein Ausgangsteil, das das zusammengeführte Drehmoment zum Beispiel an eine Reibkupplung weiterführt. Das erste Eingangsteil ist in seiner Wirkrichtung auf der einen Seite mit der Phasenschieberanordnung und auf der anderen Seite mit der Überlagerungseinheit verbunden. Das zweite Eingangsteil ist in seiner Wirkrichtung auf der einen Seite mit dem Eingangsbereich und auf der anderen Seite mit der Überlagerungseinheit verbunden. Die Überlagerungseinheit wiederum ist in ihrer Wirkrichtung auf der einen Seite sowohl mit dem ersten als auch mit dem zweiten Eingangsteil und auf der anderen Seite mit dem Ausgangsteil verbunden. Das Ausgangsteil bildet den Ausgangsbereich und kann in einer vorteilhaften Ausgestaltung eine Reibkupplung aufnehmen.

In einer zusätzlichen vorteilhaften Ausführungsform umfasst das Zwischenelement ein Zusatzmasseelement, das drehfest mit dem Planetenradträger verbunden ist. Durch die Verwendung des Zusatzmasseelements kann eine Massenträgheit des Zwischenelementes und damit auch eine Massenträgheit des Planetenradträgers verändert werden. Durch eine Veränderung der Massenträgheit des Planetenradträgers kann die gesamte Phasenschieberanordnung abgestimmt werden. Diese Veränderung des Massenträgheitsmomentes des Zwischenelementes kann sich besonders positiv auf die Phasendrehung und damit auf die Entkopplungsgüte der gesamten Drehschwingungsdämpfungsanordnung auswirken.

Eine weitere vorteilhafte Ausführungsform sieht vor, dass die Phasenschieberanordnung und die Koppelanordnung zumindest teilweise in einem Nassraum aufgenommen werden, der zumindest teilweise mit einem Fluid befüllt ist. Dabei umfasst der Nassraum zumindest teilweise einen Innenbereich der Drehschwingungsdämpfungsanordnung. Die äußere Begrenzung des Nassraumes kann durch zumindest ein Gehäuseabschnitt bildendes Element, wie beispielsweise die Primärmasse und ein getriebeseitiges Deckblech erfolgen. Die Abdichtung erfolgt bevorzugt mittels Dichtelemente im radial inneren Bereich um die Drehachse A, um eine Reibungsreduzierung an den Dichtelementen durch einen geringeren Reibdurchmesser an den Dichtelementen zu erreichen. Bei der Verwendung von Antriebssonnenrädern und Abtriebssonnenrädern können die Dichtelemente vorteilhaft zwischen den sich relativ zueinander verdrehbaren Elementen wie Antriebssonnenrad und Abtriebssonnenrad, sowie zwischen Abtriebssonnenrad und getriebeseitigem Dichtblech positioniert werden. Die Positionierung der Dichtelemente kann bevorzugt so gewählt werden, dass eine Verschraubung der Drehschwingungsdämpfungsanordnung an beispielsweise die Kurbelwelle des Antriebsaggregates, durch eine Durchgriffsöffnung radial innerhalb der Dichtelemente mittels zumindest einer Kurbelwellenschraube erfolgen kann. Dies stellt einen Vorteil hinsichtlich der Montage der Drehschwingungsdämpfungsanordnung an das Antriebsaggregat dar. Der Nassraum kann zu einer Verschleiß- und Reibungsminimierung bevorzugt mit einem Schmiermittel wie Öl oder Fett zumindest teilweise befüllt werden.

Im Folgenden werden bevorzugte Ausführungsbeispiele der Erfindung anhand der beiliegenden Figuren erläutert. Es zeigt in:
Fig. 1 eine schematische Drehschwingungsdämpfungsanordnung mit einem Planetengetriebe als eine Koppelanordnung, wobei das Planetengetriebe ein Antriebssonnenrad und ein Abtriebssonnenrad umfasst.
Fig. 2 eine schematische Drehschwingungsdämpfungsanordnung mit einem Planetengetriebe als eine Koppelanordnung, wobei das Planetengetriebe ein Antriebshohlrad und ein Abtriebshohlrad umfasst.
Fig. 3 eine Drehschwingungsdämpfungsanordnung als konstruktive Umsetzung mit den unter Fig. 1 genannten Ausführungsmerkmalen.

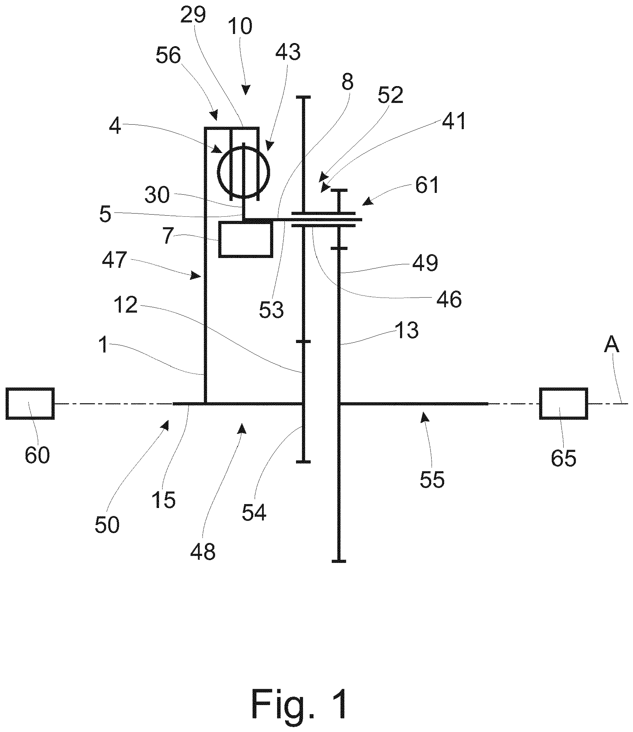

In Fig. 1 ist eine schematische Drehschwingungsdämpfungsanordnung 10 dargestellt, welche nach dem Prinzip der Leistungs- bzw. Drehmomentenaufzweigung arbeitet. Die Drehschwingungsdämpfungsanordnung 10 kann in einem Antriebsstrang eines Fahrzeugs zwischen einem Antriebsaggregat 60 und dem folgenden Teil des Antriebsstrangs, also beispielsweise ein Anfahrelement 65, wie eine Reibungskupplung, ein hydrodynamischer Drehmomentwandler oder dergleichen, angeordnet werden.

Die Drehschwingungsdämpfungsanordnung 10 umfasst einen allgemein mit 50 bezeichneten Eingangsbereich. Im Eingangsbereich 50 zweigt sich das von dem Antriebsaggregat 60, beispielsweise ein Verbrennungsmotor, über eine Kurbelwelle 15 aufgenommene Drehmoment in einen ersten Drehmomentübertragungsweg 47 und einen zweiten Drehmomentübertragungsweg 48 auf. Im Bereich einer allgemein mit der Bezugsziffer 41 bezeichneten Koppelanordnung, die auch als eine Überlagerungseinheit 52 bezeichnet werden kann und hier als ein Planetengetriebe ausgeführt ist, werden die, über die beiden Drehmomentübertragungswege 47, 48 geleiteten Drehmomentenanteile mittels eines ersten Eingangsteils 53, hier durch einen Planetenradträger 8 gebildet und eines zweiten Eingangsteils 54, hier durch ein Antriebssonnenrad gebildet, in die Koppelanordnung 41 eingeleitet und dort wieder zusammengeführt. Dabei ist auf dem Planetenradträger 8 ein Planetenrad 46 drehbar gelagert, welches mit dem Antriebssonnenrad 12 kämmt. Über ein Ausgangsteil 49, hier mit einem Abtriebssonnenrad 13 gebildet, das ebenfalls mit dem Planetenrad 46 kämmt und mit einem Ausgangsbereich 55 drehfest verbunden ist, kann das Drehmoment zu einem Anfahrelement 65, das drehfest mit dem Ausgangsbereich verbunden ist, geleitet werden.

In dem ersten Drehmomentübertragungsweg 47 ist ein allgemein mit der Bezugsziffer 56 bezeichnetes Schwingungssystem integriert. Das Schwingungssystem 56 ist als eine Phasenschieberanordnung 43 wirksam und umfasst eine, beispielsweise an das Antriebsaggregat 60, anzubindende Primärmasse 1, sowie eine, über ein Eingangselement 29 mit der Primärmasse 1 verbundene Federanordnung 4. Ein Ausgangselement 30 der Federanordnung 4 ist weiter mit einem Zwischenelement 5, das hier auch ein Zusatzmasseelement 7 umfasst, verbunden, welches hier den Planetenradträger 8 bildet. Dies stellt einen Unterschied zu den bisher bekannten Ausführungsformen dar, bei denen der Planetenradträger 8 in dem Drehmomentübertragungsweg positioniert wurde, der starr mit der Primärmasse 1 verbunden ist. In der hier beschriebenen Ausführungsform ist der Planetenradträger 8 in dem Drehmomentübertragungsweg, hier in dem ersten Drehmomentübertragungsweg 47, positioniert, der eine Phasenverschiebung von den, über den ersten Drehmomentübertragungsweg 47 geleiteten Drehungleichförmigkeiten bezüglich den, über den zweiten Drehmomentübertragungsweg 48 geleiteten Drehungleichförmigkeiten aufweist. Dadurch, dass das Ausgangselement 30 der Federanordnung 4 mit dem Planetenradträger 8 verbunden ist, bilden die Phasenschieberanordnung 43 und Koppelanordnung 41 eine, in axialer Ausdehnung, kompakte Einheit. Weiter positiv ist, dass die Massenträgheitsmomente des Planetenradträgers 8 und des Planetenrades 46 in die Massenträgheit des Zwischenelementes 5 eingehen.

Ein Drehmomentverlauf im ersten Drehmomentübertragungsweg 47 kann von dem Antriebsaggregat 60 kommend über die Primärmasse 1 in die Federanordnung 4 verlaufen. Von der Federanordnung 4 wird das erste Drehmoment über das Ausgangselement 30 und das Zwischenelement 5 zu dem Planetenradträger 8, der das Planetenrad 46 drehbar aufnimmt, geführt. Dabei sind das Ausgangselement 30, das Zwischenelement 5, das Zusatzmasseelement 7 und der Planetenradträger 8 drehfest miteinander verbunden und bilden so eine Einheit.

Im zweiten Drehmomentübertragungsweg 48 wird das zweite Drehmoment von dem Antriebsaggregat 60 in ein damit drehfest verbundenes Antriebssonnenrad 12 geleitet. Das Antriebssonnenrad 12 kämmt mit dem Planetenrad 46 und führt dadurch das zweite Drehmoment zu dem Planetenrad 46 der Koppelanordnung 41.

Folglich gelangen über die zwei Drehemomentübertragungswege 47 und 48 das erste und das zweite Drehmoment an das Planetenrad 46 und werden dort wieder zusammen geführt. Das Abtriebssonnenrad 13, das mit dem Planetenrad 46 kämmt, nimmt das zusammengeführte Drehmoment von dem Planetenrad 46 ab und führt es zu dem Ausgangsbereich 55, an dem das Anfahrelement 65, beispielsweise eine Reibkupplung oder ein Drehmomentwandler, die hier nicht gezeigt sind, befestigt sein kann.

Diese Ausführung der Drehschwingungsdämpfungsanordnung 10 zeichnet sich daher durch eine höhere Massenträgheit im Zwischenelement 5 aus, ohne die Gesamtmassenträgheit zu erhöhen, da die Massenträgheit des Planetenradträgers 8 und des Planetenrades 46 in die Massenträgheit des Zwischenelementes 5 mit eingehen. Durch die Verwendung von dem Antriebssonnenrad 12 und dem Abtriebssonnenrad 13 radial innerhalb des Planetenrades 46 kann ein kompakter axialer Bauraum geschaffen werden. Ferner werden hier nur Bauteile verwendet, die eine Außenverzahnung aufweisen. Dies ist besonders vorteilhaft hinsichtlich der Herstellungskosten zu bewerten.

Diese Ausführungsform der Drehschwingungsdämpfungsanordnung 10 eignet sich besonders für den Einbau in Fahrzeugen mit querliegendem Frontmotor, da der zu Verfügung stehende axiale Bauraum oftmals geringer ist, als bei längs eingebauten Motoren. Die Anwendung ist aber nicht darauf beschränkt, sondern kann auch in jeden anderen Fahrzeugbauraum ausgeführt werden.

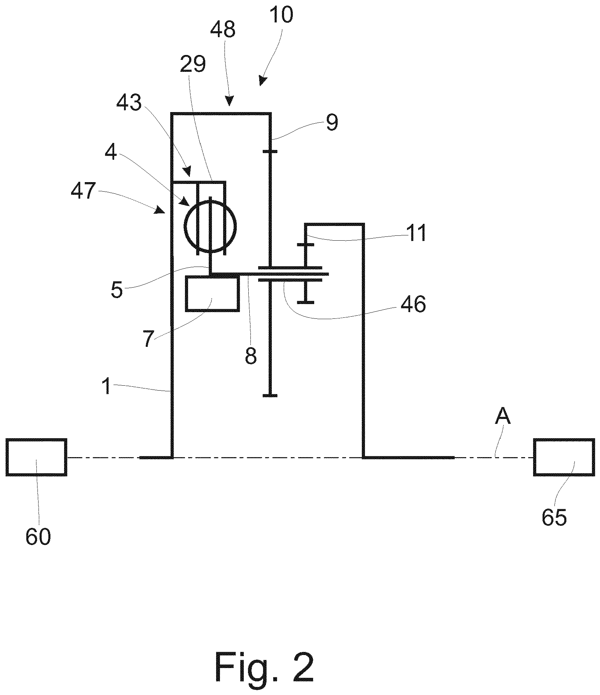

In Figur 2 ist eine Drehschwingungsdämpfungsanordnung 10 wie in Figur 1 dargestellt. Das Drehmoment kommt auch hier von dem Antriebsaggregat 60 und wird über die Primärmasse 1 weiter geleitet. Jedoch wird hier das zweite Drehmoment in dem zweiten Drehmomentübertragungsweg 48 über ein Antriebshohlrad 9, das mit dem Planetenrad 46 kämmt, an das Planetenrad 46 geführt. Der Verlauf des ersten Drehmomentes im ersten Drehmomentübertragungsweg 47 ist wie unter Figur 1 bereits beschrieben und verläuft von der Primärmasse 1 kommend über das Eingangselement 29 in die Phasenschieberanordnung 43 mit dem Federelement 4. Von dem Federelement 4 gelangt das erste Drehmoment über das Zwischenelement 5 an den mit dem Zwischenelement 5 drehfest verbundenen Planetenradträger 8. Hier gezeigt, kann wahlweise je nach Auslegung der Drehschwingungsdämpfungsanordnung 10 das Zusatzmasselement 7 zur Erhöhung der Massenträgheit des Zwischenelmenetes 5 drehfest mit dem Zwischenelement 5 verbunden werden. An dem Planetenradträger 8 ist das Planetenrad 46 drehbar gelagert. Das am Planetenrad 46 zusammengeführte erste und zweite Drehmoment wird hier von einem Abtriebshohlrad 11, das mit dem Planetenrad 46 kämmt, abgenommen und wie bereits unter Figur 1 beschrieben an das Anfahrelement 65 geleitet. Dabei sind sowohl das Antriebshohlrad 9, als auch das Abtriebshohlrad 11 in Bezug auf die Drehachse A radial außerhalb des Planetenrades 46 positioniert. Diese Ausführungsform ist besonders vorteilhaft, wenn radial innerhalb der Drehschwingungsdämpfungsanordnung 10 kein Bauraum für die unter Figur 1 beschriebenen Antriebs- und Abtriebssonnenräder 12;13 vorhanden ist. Die sonstigen Vorteile ergeben sich wie unter Figur 1 bereits erwähnt.

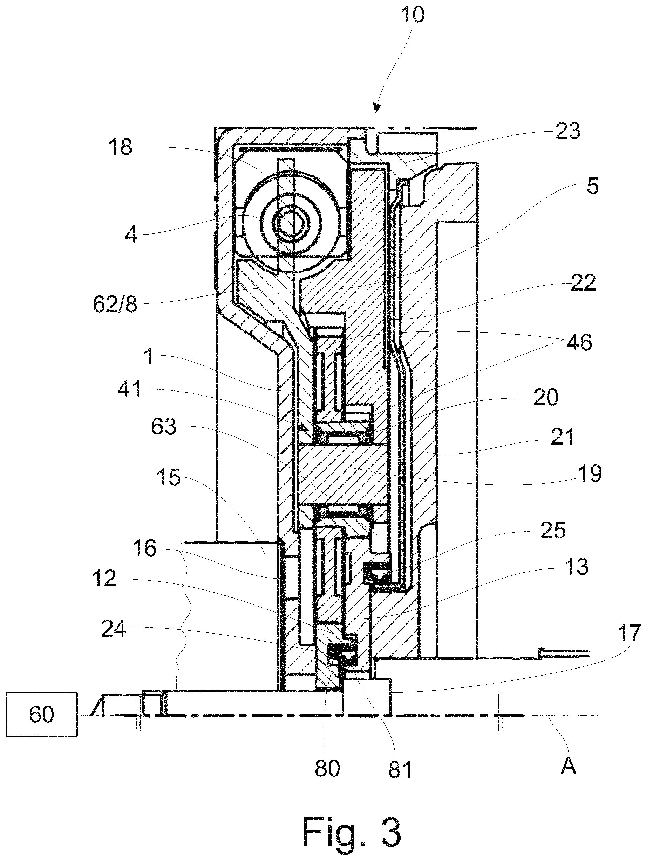

In Figur 3 ist eine Drehschwingungsdämpfungsanordnung 10 wie in Figur 1 dargestellt, jedoch als konstruktive Umsetzung.

Dabei ist die Primärmasse 1 drehfest mit einer Kurbelwelle 15 eines Antriebsaggregates 60 verbunden. Diese Verbindung ist hier mit einer Hirth-Verzahnung 16 und einer Zentralschraube 17 dargestellt. Hier nicht dargestellt, aber ebenso möglich ist eine Verbindung mittels Hirth-Verzahnung und Verschraubung durch die verzahnte Fläche, eine Standard-Kurbelwellenverschraubung oder eine Anbindung mittels einer Flexplate möglich. Die Hirth-Verzahnung 16 mit Zentralschraube 17 bietet jedoch die Möglichkeit, die Koppelanordnung 41 freier gestalten zu können, da durch diese Gestaltung der Verbindung von der Kurbelwelle 15 und der Primärmasse 1 der radiale Bauraum innerhalb der Drehschwingungsdämpfungsanordnung 10 reduziert wird. Über die Primärmasse 1 wird die Federanordnung 4 einerseits über einen Gleitschuh 18 angesteuert. Andererseits ist die Federanordnung 4 im Drehmomentfluss über eine Nabenscheibe 62 verbunden, wobei die Nabenscheibe 62 weiter radial innen den Planetenradträger 8 bildet. Wie bereits beschrieben, ist das Massenträgheitsmoment des Planetenradträgers Pos.8 gleichzeitig das Massenträgheitsmoment des Zwischenelementes 5. Das Massenträgheitsmoment des Zwischenelementes 5 ist in dieser Ausführungsvariante möglichst groß ausgeführt um eine gute Entkopplungswirkung der gesamten Drehschwingungsdämpfungsanordnung 10 zu erzielen. Diese Ausführungsvariante ermöglicht es somit in einem gleichen Bauraum wesentlich mehr Massenträgheit des Zwischenelementes 5 zu erzielen, als dies bei bisherigen Ausführungsvarianten möglich ist. Natürlich kann das Massenträgheitsmoment des Zwischenelementes 5 reduziert werden, falls geringere Anforderungen an die Entkopplungsgüte gestellt werden oder weniger Bauraum zur Verfügung steht oder ein geringeres Gesamtmassenträgheitsmoment bzw. Gewicht angestrebt ist. Weiter ist der Planetenradträger 8 in dieser Ausführungsvariante fliegend gelagert und zentriert sich alleine über die Verzahnung. In einer hier nicht gezeigten Ausführungsvariante kann der Planetenradträger 8 auch zu der Primärmasse 1 oder zu einem Sekundärschwungrad 21 gelagert werden. An dem Planetenradträger 8 befindet sich ein Planetenradbolzen 19, auf dem mittels eines Planetenradlagers 20, welches als ein Wälz- oder ein Gleitlager ausgeführt sein kann, das Planetenrad 46 am Planetenradträger 8 gelagert ist. Das Planetenrad 46 ist in dieser Ausführungsvariante gestuft und zweiteilig vorgesehen. Eine Verbindung der beiden Räder kann beispielsweise über eine Schweißverbindung oder ein ähnliches unlösbares oder lösbares, stoffform- oder kraftschlüssiges Fügeverfahren hergestellt werden. Das Antriebssonnenrad 12 ist mit der Primärmasse1 mittels Schweißen, Schrauben, Nieten oder eines gleichwertigen Verfahres drehfest verbunden. In einer hier nicht gezeigten Ausführungsvariante ist aber auch eine einteilige Ausführung von der Primärmasse1 und dem Antriebssonnenrad 12 möglich. Das Abtriebssonnenrad 13 ist mit dem Sekundärschwungrad 21 wiederum drehfest verschraubt, vernietet oder verschweißt, bzw. mit einem gleichwertigen Fügeverfahren verbunden. Um die Drehschwingungsdämpfungsanordnung 10 in ihrem Innenbereich, der auch als Nassraum 63 bezeichnet werden kann, mit einem Schmiermittel wie Öl oder Fett füllen zu können, um eine ausreichende Schmierung der Verzahnung sicherzustellen, ist ein Dichtblech 22 zwischen dem Zwischenelement 5 und dem Sekundärschwungrad 21 positioniert. Dabei ist hier der radial äußere Bereich des Dichtbleches 22mit einem Starterzahnkranz 23, der selbst drehfest mit dem Zwischenelement 5 verbunden ist, drehfest und flüssigkeitsdicht verbunden. Ein Sekundärdichtelement 25, hier vorzugsweise als ein Simmerring ausgeführt, ist im radial inneren Bereich des Dichtbleches 22 positioniert und verbindet die relativ zueinander verdrehbaren Bauteile Dichtblech 22 und Abtriebssonnenrad 13 in der Form, dass die relative Verdrehung der beiden Bauteile zueinander möglich ist aber dabei kein Schmiermittel aus dem Nassraum 63 austreten kann. In einer hier nicht gezeigten Ausführungsform kann das Dichtblech 22 auch direkt mit der Primärmasse drehfest und flüssigkeitsdicht verbunden werden. Weiter ist ein Sonnenraddichtelement 24 zwischen dem Antriebssonnenrad 12 und dem Abtriebssonnenrad 13 positioniert. Durch jeweils eine taillierte Ausdrehung 80 und 81 radial innen an der Stirnseite der beiden Sonnenräder 12 und 13, kann das Sonnenraddichtelement 24 so positioniert werden, dass ein axialer Mehrbauraum durch die Dichtungsstelle nicht entsteht. Das Sekundärdichtelement 25 dichtet das Dichtblech 22 gegenüber dem Sekundärschwungrad 21 oder dem Abtriebssonnenrad 13. Darüber hinaus können die beiden Sonnenräder 12 und 13 auch zueinander über ein Gleit- oder Wälzlager gelagert werden.

### Bezugszeichen

- 1: Primärmasse
- 4: Federanordnung
- 5: Zwischenelement
- 7: Zusatzmasseelement
- 8: Planetenradträger
- 9: Antriebshohlrad
- 10: Drehschwingungsdämpfungsanordnung
- 11: Abtriebshohlrad
- 12: Antriebssonnenrad
- 13: Abtriebssonnenrad
- 15: Kurbelwelle
- 16: Hirth-Verzahnung
- 17: Zentralschraube
- 18: Gleitschuhe
- 19: Planetenradbolzen
- 20: Planetenradlager
- 21: Sekundärschwungrad
- 22: Dichtblech
- 23: Starterzahnkranz
- 24: Sonnenraddichtelement
- 25: Sekundärdichtelement
- 29: Eingangselement
- 30: Ausgangselement
- 41: Koppelanordnung
- 43: Phasenschieberanordnung
- 46: Planetenrad
- 47: erster Drehmomentübertragungsweg
- 48: zweiter Drehmomentübertragungsweg
- 49: Ausgangsteil
- 50: Eingangsbereich
- 52: Überlagerungseinheit
- 53: erstes Eingangsteil
- 54: zweites Eingangsteil
- 55: Ausgangsbereich
- 56: Schwingungssystem
- 60: Antriebsaggregat
- 61: Planetengetriebe
- 62: Nabenscheibe
- 63: Nassraum
- 65: Anfahrelement
- 80: taillierte Ausdrehung
- 81: taillierte Ausdrehung
- A: Drehachse

## Patentansprüche

1. Drehschwingungsdämpfungsanordnung (10) für den Antriebsstrang eines Kraftfahrzeugs, umfassend
- einen zur Drehung um eine Drehachse (A) anzutreibenden Eingangsbereich (50) und einen Ausgangsbereich (55) und
- einen ersten Drehmomentübertragungsweg (47) und parallel dazu einen zweiten Drehmomentübertragungsweg (48), die beide von dem Eingangsbereich (50) ausgehen und
- eine, mit dem Ausgangsbereich (55) in Verbindung stehende Koppelanordnung (41) zur Überlagerung der über die Drehmomentübertragungswege (47; 48) geleiteten Drehmomente, wobei die Koppelanordnung (41) ein Planetengetriebe (61) mit einem Planetenradträger (8) umfasst und
- eine Phasenschieberanordnung (43) für den ersten Drehmomentübertragungsweg (47) zur Erzeugung einer Phasenverschiebung von über den ersten Drehmomentübertragungsweg (47) geleiteten Drehungleichförmigkeiten bezüglich der, über den zweiten Drehmomentübertragungsweg (48) geleiteten Drehungleichförmigkeiten, wobei die Phasenschieberanordnung (43) ein Eingangselement (29) und ein Ausgangselement (30) umfasst, wobei das Ausgangselement (30) der Phasenschieberanordnung (43) den Planetenradträger (8) umfasst, an dem wenigstens ein Planetenrad (46) drehbar gelagert ist, wobei die Phasenschieberanordnung (43) ein Schwingungssystem (56) mit einer Primärmasse (1) und ein gegen die Wirkung einer Federanordnung (4) bezüglich der Primärmasse (1) um die Drehachse (A) drehbares Zwischenelement (5) umfasst, wobei das Planetengetriebe (61) ein Antriebssonnenrad (12) und ein Abtriebssonnenrad (13) umfasst, wobei das Abtriebssonnenrad (13) drehfest mit dem Ausgangsbereich (55) verbunden ist und wobei das Antriebssonnenrad (12) und das Abtriebssonnenrad (13) mit dem Planetenrad (46) kämmen, oder das Planetengetriebe (61) ein Antriebshohlrad (9) und ein Abtriebshohlrad (11) umfasst, wobei das Abtriebshohlrad drehfest mit dem Ausgangsbereich (55) verbunden ist und wobei das Antriebshohlrad (9) und das Abtriebshohlrad (11) mit dem Planetenrad (46) kämmen,
**dadurch gekennzeichnet, dass** das Antriebssonnenrad (12) beziehungsweise das Antriebshohlrad (9) mit der Primärmasse (1) drehfest verbunden ist.

2. Drehschwingungsdämpfungsanordnung (10) nach Anspruch 1, **dadurch gekennzeichnet, dass** die Koppelanordnung (41) ein erstes Eingangsteil (53), ein zweites Eingangsteil (54), eine Überlagerungseinheit (52) und ein Ausgangsteil (49) umfasst, wobei das erste Eingangsteil (53) mit dem Ausgangselement (30) der Phasenschieberanordnung (43) und der Überlagerungseinheit (52) verbunden ist und das zweite Eingangsteil (54) mit dem Eingangsbereich (50) und der Überlagerungseinheit (52) verbunden ist und die Überlagerungseinheit (52) sowohl mit dem ersten Eingangsteil (53), als auch mit dem zweiten Eingangsteil (54) und dem Ausgangsteil (49) verbunden ist und wobei das Ausgangsteil (49) den Ausgangsbereich (55) bildet.

3. Drehschwingungsdämpfungsanordnung (10) nach Anspruch 3, **dadurch gekennzeichnet, dass** das Zwischenelement (5) ein Zusatzmasseelement (7) umfasst, das drehfest mit dem Planetenradträger (8) verbunden ist.

4. Drehschwingungsdämpfungsanordnung (10) nach einem der vorherigen Ansprüche, **dadurch gekennzeichnet, dass** die Phasenschieberanordnung (43) und die Koppelanordnung (41) zumindest teilweise in einem Nassraum (63) aufgenommen werden, der zumindest teilweise mit einem Fluid befüllt ist.

## Claims

1. Torsional vibration damping arrangement (10) for the drive train of a motor vehicle, comprising
- an input region (50) which is to be driven for rotation about a rotational axis (A) and an output region (55), and
- a first torque transmission path (47) and, parallel thereto, a second torque transmission path (48) which both emanate from the input region (50), and
- a coupling arrangement (41) which is connected to the output region (55) in order to superimpose the torques which are conducted via the torque transmission paths (47; 48), the coupling arrangement (41) comprising a planetary transmission (61) with a planetary gear carrier (8), and
- a phase shifter arrangement (43) for the first torque transmission path (47) for generating a phase shift of rotational non-uniformities which are conducted via the first torque transmission path (47) with regard to the rotational non-uniformities which are conducted via the second torque transmission path (48), the phase shifter arrangement (43) comprising an input element (29) and an output element (30), the output element (30) of the phase shifter arrangement (43) comprising the planetary gear carrier (8), on which at least one planetary gear (46) is mounted rotatably, the phase shifter arrangement (43) comprising a vibration system (56) with a primary mass (1) and an intermediate element (5) which can be rotated about the rotational axis (A) with regard to the primary mass (1) counter to the action of a spring arrangement (4), the planetary transmission (61) comprising a drive sun gear (12) and an output sun gear (13), the output sun gear (13) being connected fixedly to the output region (55) so as to rotate with it, and the drive sun gear (12) and the output sun gear (13) meshing with the planetary gear (46), or the planetary transmission (61) comprising a drive internal gear (9) and an output internal gear (11), the output internal gear being connected fixedly to the output region (55) so as to rotate with it, and the drive internal gear (9) and the output internal gear (11) meshing with the planetary gear (46), **characterized in that** the drive sun gear (12) or the drive internal gear (9) is connected fixedly to the primary mass (1) so as to rotate with it.

2. Torsional vibration damping arrangement (10) according to Claim 1, **characterized in that** the coupling arrangement (41) comprises a first input part (53), a second input part (54), a superimposition unit (52) and an output part (49), the first input part (53) being connected to the output element (30) of the phase shifter arrangement (43) and the superimposition unit (52), and the second input part (54) being connected to the input region (50) and the superimposition unit (52), and the superimposition unit (52) being connected both to the first input part (53) and to the second input part (54) and the output part (49), and the output part (49) forming the output region (55).

3. Torsional vibration damping arrangement (10) according to Claim 3, **characterized in that** the intermediate element (5) comprises an additional mass element (7) which is connected fixedly to the planetary gear carrier (8) so as to rotate with it.

4. Torsional vibration damping arrangement (10) according to one of the preceding claims, **characterized in that** the phase shifter arrangement (43) and the coupling arrangement (41) are received at least partially in a wet space (63) which is filled at least partially with a fluid.

## Revendications

1. Ensemble d'amortissement de vibrations torsionnelles (10) pour la chaîne cinématique d'un véhicule automobile, comportant
- une région d'entrée (50) à entraîner en rotation autour d'un axe de rotation (A) et une région de sortie (55) et
- une première voie de transmission de couple (47) et, parallèlement à celle-ci, une deuxième voie de transmission de couple (48), lesquelles partent toutes deux de la région d'entrée (50) et
- un ensemble d'accouplement (41) en liaison avec la région de sortie (55) pour la superposition des couples guidés par le biais des voies de transmission de couple (47 ; 48), dans lequel l'ensemble d'accouplement (41) comporte un engrenage planétaire (61) doté d'un porte-satellites (8) et
- un ensemble de déphasage (43) pour la première voie de transmission de couple (47) pour produire un déphasage d'irrégularités de rotation guidées par le biais de la première voie de transmission de couple (47) par rapport aux irrégularités de rotation guidées par le biais de la deuxième voie de transmission de couple (48), dans lequel l'ensemble de déphasage (43) comporte un élément d'entrée (29) et un élément de sortie (30), dans lequel l'élément de sortie (30) de l'ensemble de déphasage (43) comporte le porte-satellites (8) sur lequel au moins un pignon satellite (46) est monté rotatif, dans lequel l'ensemble de déphasage (43) comporte un système oscillant (56) doté d'une masse primaire (1) et un élément intermédiaire (5) pouvant tourner autour de l'axe de rotation (A) par rapport à la masse primaire (1) à l'encontre de l'action d'un ensemble de ressort (4), dans lequel l'engrenage planétaire (61) comporte un pignon planétaire d'entraînement (12) et un pignon planétaire de sortie (13), dans lequel le pignon planétaire de sortie (13) est relié de manière solidaire en rotation à la région de sortie (55), et dans lequel le pignon planétaire d'entraînement (12) et le pignon planétaire de sortie (13) s'engrènent avec le pignon satellite (46), ou l'engrenage planétaire (61) comporte une couronne d'entraînement (9) et une couronne de sortie (11), dans lequel la couronne de sortie est reliée de manière solidaire en rotation à la région de sortie (55), et dans lequel la couronne d'entraînement (9) et la couronne de sortie (11) s'engrènent avec le pignon satellite (46),
**caractérisé en ce que** le pignon planétaire d'entraînement (12), respectivement la couronne d'entraînement (9), est relié(e) de manière solidaire en rotation à la masse primaire (1).

2. Ensemble d'amortissement de vibrations torsionnelles (10) selon la revendication 1, **caractérisé en ce que** l'ensemble d'accouplement (41) comporte une première partie d'entrée (53), une deuxième partie d'entrée (54), une unité de superposition (52) et une partie de sortie (49), la première partie d'entrée (53) étant reliée à l'élément de sortie (30) de l'ensemble de déphasage (43) et à l'unité de superposition (52), et la deuxième partie d'entrée (54) étant reliée à la région d'entrée (50) et à l'unité de superposition (52), et l'unité de superposition (52) étant reliée à la fois à la première partie d'entrée (53) et à la deuxième partie d'entrée (54) et à la partie de sortie (49), et la partie de sortie (49) formant la région de sortie (55).

3. Ensemble d'amortissement de vibrations torsionnelles (10) selon la revendication 3, **caractérisé en ce que** l'élément intermédiaire (5) comporte un élément de masse supplémentaire (7) qui est relié de manière solidaire en rotation au porte-satellites (8).

4. Ensemble d'amortissement de vibrations torsionnelles (10) selon l'une des revendications précédentes, **caractérisé en ce que** l'ensemble de déphasage (43) et l'ensemble d'accouplement (41) sont reçus au moins partiellement dans un espace humide (63) qui est rempli au moins partiellement d'un fluide.
